# EUROPEAN PATENT APPLICATION

(11) **EP 1 003 268 A1**
(43) Date of publication of application: **24.05.2000**
(21) Application number: 99122804.0
(22) Date of filing: 16.11.1999
(51) Int. Cl.: H02K 3/50, H02K 29/08

(54) **Rotary electrical equipment**

(30) Priority: 19.11.1998 JP 32987998
(71) Applicant: Moriyama Kogyo Kabushiki Kaisha, Shizuoka-ken (JP)
(72) Inventor: Takano, Tadashi, c/o Moriyama Kogyo K.K., Shuuchi-gun, Shizuoka-ken (JP)
(74) Representative: Tiedtke, Harro, Dipl.-Ing.

(57) **Abstract**

Rotary electrical equipment with armature coils on a stator, wherein the wiring treatment used for connecting the terminals of armature coils of the stator to the power source connection lines, can be simple and easy, assembly workability is improved, the difficulty of terminal treatment does not increase even when the slot number of the iron core is increased, and the treated terminal portions are less bulky and thus suited for size reduction of the whole assembly.

The electrical conductor is preferably a thick plate or wire made of copper, and having a large sectional area sufficient for current passage, for example, preferably a sectional area equal to or greater than that of the armature coil wire. Terminal treatment will become easier if the electrical conductor is formed with notches which open facing the peripheral edge of the insulating substrate, and the terminals of the armature coils are engaged with these notches. Securing the armature coil connection wiring plate to the coil guide member held on the iron core of the stator, is desirable to hold the wiring plate concentrically with the stator, but it may be held inside the case housing the stator.

## Description

This invention relates to rotary electrical equipment, such as a brushless DC motor, flywheel magneto, or a generator, having armature coils on a stator.

In the rotary electrical equipment, such as a brushless DC motor, flywheel magneto, or generator, a number of systems have been known having armature coils on the stator. In such a rotary electrical equipment, coils on the stator protrude from the iron core on both sides, and traditionally, the terminals of coils are each connected and soldered by hand to the respective external power source connection lines.

However, since the protruding portions of the coils (usually called coil ends) are formed at both ends of the stator, hand-work connection of the coil terminals to the power source connection lines causes wiring of the coil terminals to be complicated, raising a problem of troublesome terminal treatment as well as poor assembly workability. This terminal treatment becomes notably complicated and more troublesome especially when the number of poles of the iron core increases, resulting in a larger assembly size due to bulky terminal portions treated.

On the other hand, it has recently been contemplated that brushless DC motors are used as power drives for mobile objects such as motor-driven vehicles. This is because the motor has a rotor with permanent magnets, and recent successive development of high quality permanent magnets enables the motor to be smaller in size and highly powered. However, since the mobile object generally uses batteries as a power source, the motor should be driven under low voltages and large currents.

Therefore, the current supplied to the armature coils becomes larger and accordingly the wire thickness of the armature coils should be larger. Thus, a conductor of large thickness is usually wound around the iron core, but the thick conductor is difficult to bend, so that the difficulty of the terminal treatment is increased as well as the bulk of the treated terminal portions, resulting in a further size increase of the motor.

In view of the foregoing, it is the object of this invention to provide rotary electrical equipment in which wiring treatment used for connecting the terminals of armature coils of the stator to the power source connection lines can be simple and easy, assembly workability is improved, the difficulty of the terminal treatment does not increase even when the slot number of the iron core is increased, and the treated terminal portions are less bulky and thus suited for size reduction of the whole assembly.

According to this invention, this object can be achieved by rotary electrical equipment having armature coils on a stator, wherein on one side of said stator is provided an armature coil connection wiring plate with electric conductors for large electric currents fixed to an annular insulating substrate, and terminals of said armature coils are connected to power source connection lines through said electric conductors.

The electrical conductor is preferably a thick plate or wire made of copper, and having a large sectional area sufficient for current passage, for example, preferably a sectional area equal to or greater than that of the armature coil. The electrical conductor is preferably fixed with adhesive to the insulating substrate for easy work, but rivets or screws may be used instead of or along with the adhesive. The terminal treatment will become easier if the electrical conductor is formed with notches which open facing the peripheral edge of the insulating substrate, and the terminals of the armature coils are engaged with these notches.

Securing the armature coil connection wiring plate to the coil guide member held on the iron core of the stator, is desirable to hold the wiring plate concentrically with the stator, but it may be held inside the case housing the stator.

When the armature coils are energized by a three-phase alternating current, an annular electric conductor for connecting the neutral point side terminals of coils may be fixed to one side of the insulating substrate, and three electric conductors for connecting the neutral point side terminals of coils, to the other side of the insulating substrate, in which case compact wiring arrangement can be possible by making effective use of both sides of the insulating substrate.

The surfaces of the insulating substrate on which are fixed the electric conductors, are preferably coated by insulating materials. A thick enamel wire can be used for the armature coil, but if a plurality of thin enamel wires are stranded into a mutually bonded wire, this stranded wire is flexible enough to produce less bulky coils of high density and suited for size reduction, improving workability of the terminal treatment as well as of assembling.
Fig. 1 is a sectional side view showing an embodiment of this invention;
Fig. 2 is a right side view showing the disposition of the stator and the Hall elements;
Fig. 3 is a sectional side view of the rotor;
Fig. 4 is a right side view of the same;
Fig. 5 is a sectional view taken on line V-V of Fig. 3;
Fig. 6 is an exploded perspective view of the rotor;
Fig. 7 is a sectional view of the annular sheet;
Fig. 8 is a right side view of the wiring plate;
Fig. 9 is a left side view of the same; and
Fig. 10 is a connection diagram of the armature coils.

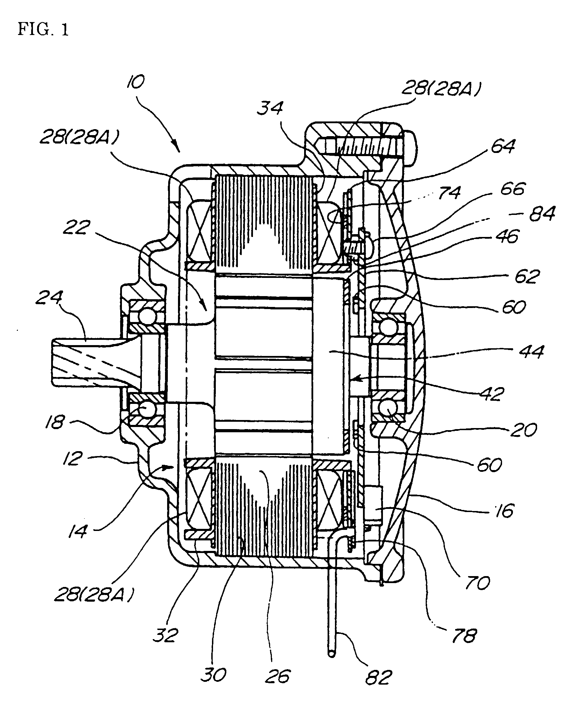

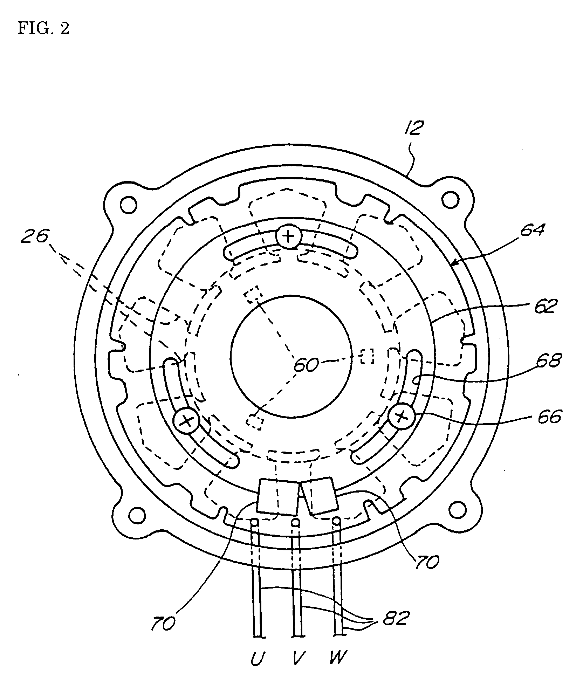

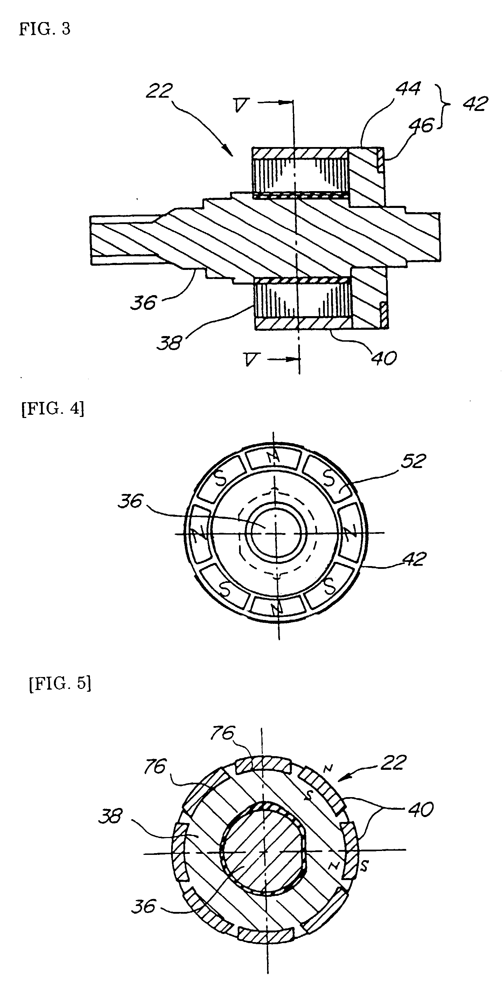

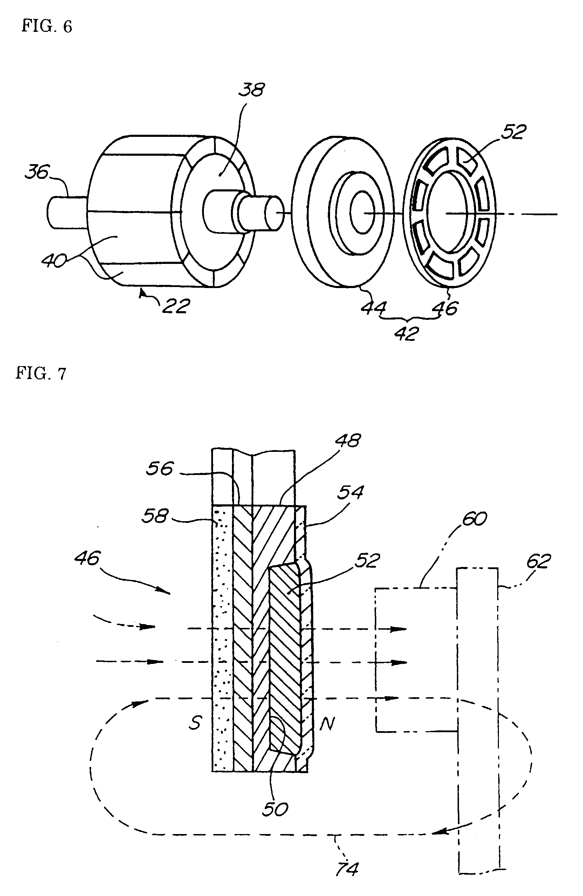

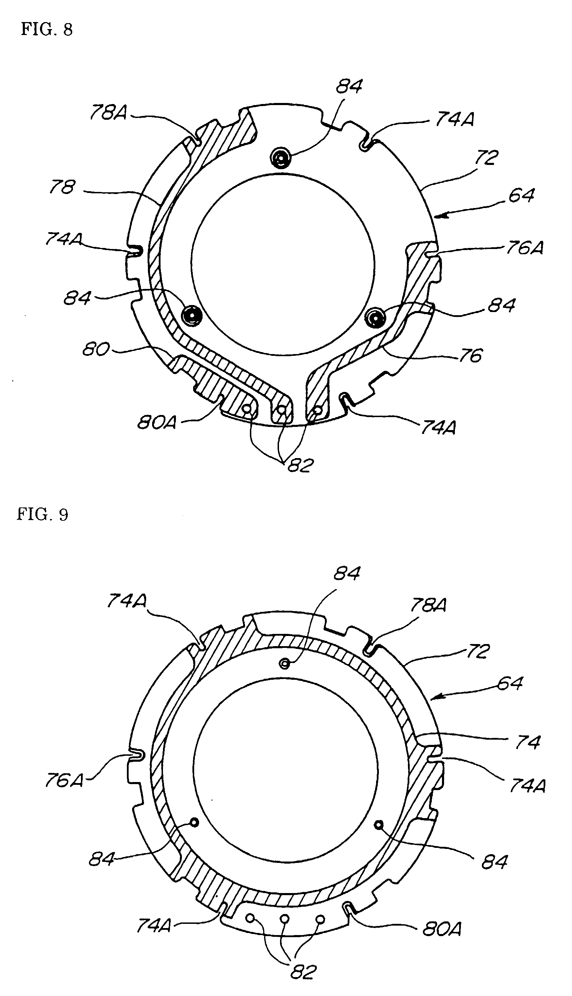

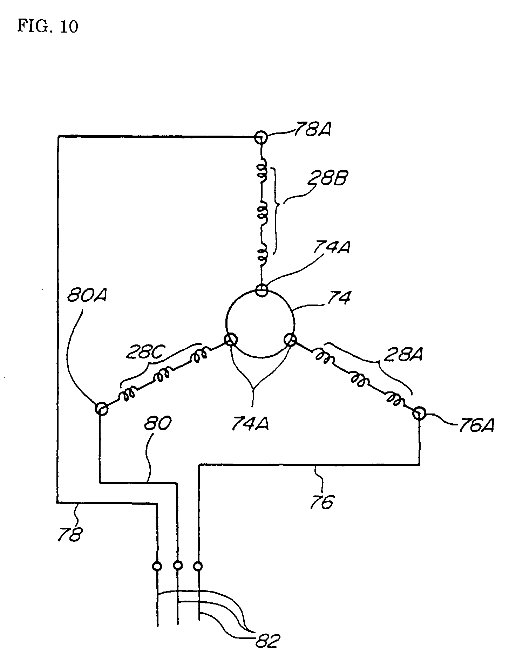

Fig. 1 is a sectional side view showing an embodiment of the brushless DC motor according to this invention, Fig. 2 a right side view showing the disposition of the stator and Hall elements, Fig. 3 a sectional side view of the rotor, Fig. 4 a right side view of the same, Fig. 5 a sectional view taken on line V-V of Fig. 3, Fig. 6 an exploded perspective view of the rotor, and Fig. 7 a sectional view showing the structure of the annular sheet. Fig. 8 is a right side view of the armature coil connection wiring plate, Fig. 9 a left side view of the same, and Fig. 10 a connection diagram of the armature coils.

In Figs. 1 and 2, numeral 10 designates a brushless DC motor of an inner rotor type, a three-phase alternating current synchronous motor. The motor 10 comprises a stator 14 fitted fixedly inside a case body 12, and a rotor 22 held for rotation on the case body 12 and a case lid 16 by bearings 18, 20. One end of the rotor 22 is protruded through the case body 12, which protruded end is used as a gear 24 for taking out motor output.

The stator 14 has nine field magnet iron cores 26 protruding radially inwardly as shown in Fig. 2, and an armature coil 28 (see Fig. 1) is wound around each of the iron cores. That is, these field magnet iron cores 26 are formed by an iron laminate 30 made of soft iron plates punched out in a given shape and piled up in one body, and arranged such that plastic plates 32, 34 as coil guide members are placed on each side of the laminate 30, claws formed in the plates 32, 34 are fitted in the iron cores, and then the armature coil 28 is wound around each of the iron cores 26.

Electric wire for the armature coil 26 may be a thick enamel wire made of copper coated by an insulating material, and preferably a stranded wire into which a plurality of (for example, seven) thin enamel wires are stranded together. Such a stranded wire is flexible, and it is possible to bend the wire along the iron core to form the armature coil 28 without volume increase, enabling the length of the coil end 28A (see Fig. 1) protruding outwardly (in the longitudinal direction of the rotor) from both ends of the coil 28 to be reduced. Also, terminals of the coils 28 can be treated easily. Nine armature coils 28 are divided into three groups, and three-phase alternating currents U, V, W are supplied to the respective groups through wiring plate 64 (described later) to form a rotating magnetic field at the center of the stator 14.

The rotor 22, as shown in Figs. 3-6, comprises a rotary shaft 36, a yoke 38 fitted on and bonded fixedly to the rotary shaft 36, and eight permanent magnets 40 bonded fixedly on the outside circumference of the yoke 38. The yoke 38 is a laminate of punched soft iron plates, and can be made by utilizing the residual material left after the iron plates for the laminate 30 of the stator 14 are punched out. Neodymium type permanent magnets are the best for the rotor. The permanent magnets 40 are bonded fixedly to the yoke 38 in the state of non-magnetization and magnetized radially after fixing.

On one end of the rotor 22, that is, on one end of the yoke 38 is fixed a magnet retainer ring 42 for detecting the position of magnetic poles. The magnet retainer ring 42 is composed of a plastic annular member 44 and a thin plate-like annular sheet 46 bonded together, and its outside diameter is determined such that the retainer ring may be received radially inside the coil ends 28A of the armature coils 28. In this embodiment, the outside diameter of the magnet retainer ring 42 is a little smaller than that of the rotor 22. The annular member 44 is bonded, at the opposite end face from the annular sheet 46, to the yoke 38, and at the inside circumference, to the rotary shaft 36.

The annular sheet 46, as shown in Fig. 7, comprises a substrate 48 of polyester resin, nine sheet-like magnets 52 filled in recesses 50 formed circumferentially at regular intervals in one side of the substrate 48, a protector 54 of transparent acrylic resin covering the sheet-like magnets 52, an acrylic adhesive resin layer 56 coated on the other side of the substrate 48, and a removable protective film 58 bonded to the adhesive resin layer 56. This protective film 58 is removed when the annular sheet 46 is bonded to the annular member 44.

The sheet-like magnets 52 used here may be made by solidifying paste acrylic resin mixed with powdered or particulate magnet (paste magnet). For the magnetic material used here, for example, rare earth powdered magnet such as Nd-Fe-B (Neodymium-Fe-Boron) is suited. The magnets 52 are magnetized in the direction of the thickness (in the longitudinal direction of the rotary shaft 36) after solidification.

The annular sheet 46 may be supplied from a manufacturer, with the protective film 58 bonded, and the protective film 58 may be removed so as to bond the annular sheet to the annular member 44 when the motor 10 is assembled. At this time, the annular member 44 can be positioned automatically in the direction of rotation using attractive/repulsive force between the permanent magnets 40 of the rotor 22 and the sheet-like magnets 52 in the annular sheet 46.

Specifically, if the rotary shaft 36 of the rotor 22 is, for example, raised upright and the annular member 44 to which is bonded the annular sheet 46 is placed on the top of the rotor 22, the annular sheet 46 is attracted by the permanent magnets 40 at a given circumferential angular position and the annular member 44 is held there, as a result of the interaction between magnetic flux of the magnets 40 directed upwardly from the axial end face of the magnets and that of the sheet-like magnets 52 in the vertical direction (in the direction parallel to the rotary shaft 36). In this condition, after putting a positioning mark, the annular member 44 may be fixed with adhesive to the yoke 38 and rotary shaft 36.

Alternatively, after bonding the annular member 44 to the rotor 22 in advance, the annular sheet 46 with the protective film 58 may be positioned as described above, and after putting the positioning mark, the protective film 58 may be removed to bond the annular sheet 46 to the annular member 44. Also, if the annular sheet 46 is flexible enough and the protective film 58 is divided into a plurality of portions so as to be removable, the annular sheet may be bonded as follows. That is, after positioning the annular sheet 46 in the same manner as described above, the annular sheet may be pressed with a finger at one portion near the peripheral edge against the annular member 44 so as to prevent mis-alignment, while the other portion of the annular sheet 46 may be lifted up from the annular member 44 to remove a part of the protective film 58 for bonding. Then, the bonded portion may be pressed with a finger and the non-bonded portion may be lifted up from the annular member 44 to remove the remaining protective film 58.

In this way, the magnetic retainer ring 42 composed of the annular member 44 fixed to the rotor 22, and the annular sheet 46, is received radially inside the coil ends 28A of the armature coils 28, as shown in Fig. 1. The sheet-like magnets 52 of the annular sheet 46 are adapted to face, in the longitudinal direction of the rotary shaft 36, three Hall elements 60 as magnetic sensors for detecting rotational angular position of the rotor 22. Numeral 62 in Figs. 1 and 2 designates an annular sensor holder for holding these Hall elements 60.

The sensor holder 62 is secured with three screws 66 to the annular wiring plate 64 fitted fixedly on the plate 34 of the stator 14. Engaging holes 68 (Fig. 2) for the screws 66 are circumferentially elongated, allowing fixing position of the sensor holder 62 to be adjusted in the direction of rotation. The Hall elements 60 are of a surface-mounting type, surface-mounted to a printed circuit (not shown) formed on the sensor holder 62 to be connected to a connector 70, and connected to an external control device (not shown) through the connector 70.

Now, the wiring plate 64 will be described with reference to Figs. 1, 8 and 9. The wiring plate 64 comprises an annular insulating substrate 72, an annular electric conductor 74 bonded fixedly on one side of the substrate 72, and three electric conductors 76, 78, 80 bonded to the other side. The substrate 72 is made from base material such as glass fabric or paper impregnated with thermosetting resin such as phenol resin and cured.

The annular electric conductor 74, as shown in Fig. 9, is fixed with adhesive to the left side (the side facing the stator 14 in Fig. 1) of the substrate 72 concentrically therewith. The electric conductor 74 is formed with three notches 74A which open facing the outside circumference of the substrate 72, at regular intervals of 120° . That is, the three notches 74A, as shown in Fig. 8, are formed so as to be aligned with notches formed in the substrate 72, and arranged such that the inner edges of the notches 74A are positioned further inward than those of the notches of the substrate 72.

Three electric conductors 76, 78, 80, as shown in Fig. 8, are bonded fixedly to the right side (the opposite side from the stator 14 in Fig. 1) of the substrate 72. The three electric conductors 76, 78, 80 are formed with notches 76A, 78A, 80A, respectively, which are adapted to face the outside circumference of the substrate 72 from between the three notches 74A provided in the electric conductor 74. That is, the notches 76A, 78A, 80A are each disposed in the middle of the interval (120° ) between three notches 74A. The notches 76A, 78A, 80A, like the notches 74A, are formed so as to be aligned with the notches formed in the substrate 72, and arranged such that their inner edges are positioned a little further inward than those of the notches of the substrate 72.

The three electric conductors 76, 78, 80, as shown in Fig. 8, extend so as to face the outside circumference of the substrate 72 from between one notch 74A of the electric conductor 74 (lower side of Fig. 8) and the notch 80A of the electric conductor 80. Three power source connection lines 82 passing through the substrate and the electric conductors 76, 78, 80 are connected, between the notches 74A and 80A, to the electric conductors 76, 78, 80, respectively.

The electric conductors 74, 76, 78, 80 used here are made of copper plates with adequate thickness formed by blanking, a sufficiently large sectional area for current passage is secured, and the electric resistance is set so as to be matched with large currents for armature coils 28. Both sides of the wiring plate 64 are coated by insulating layers. Three nuts 84 are fastened by calking near the inside circumference of the substrate 72 at the position where they do not interfere with the electric conductors 74, 76, 78, 80. The screws 66 for fixing the sensor holder 62 are to be screwed in the nuts 84.

On the wiring plate 64, nine armature coils 28 are divided into three groups 28A, 28B, 28C, which are arranged in star connection as shown in Fig. 10. That is, the neutral points of the groups 28A, 28B, 28C are connected to the annular electric conductor 74, and non-neutral points, to the electric conductors 76, 78, 80, respectively.

The neutral point side terminals of the coil groups 28A, 28B, 28C are each led out, through the space between the periphery of the wiring plate 64 and the inside wall of the case body 12, to the opening which appears at the time of removal of the case lid 16 of the case body 12, and fitted in the notches 76A, 78A, 80A respectively for temporary setting.

Then, all the terminals of the coil groups 28A, 28B, 28C are soldered to the notches 74A, 76A, 78A, 80A, respectively, and unnecessary end portions of the terminals are cut off. Heat applied during soldering causes the enamel coating of the coils 28 to be eliminated, providing efficient soldering work.

In this embodiment, the magnet retainer ring 42 is received inside the coil ends 28A of the armature coils 28. In addition, since the sheet-like magnets 52 are magnetized in the direction of the thickness, that is, in the direction parallel to the rotary shaft 36, the Hall elements 60 can be disposed adjacent to and facing the magnets 52 in the direction parallel to the rotary shaft 36, as shown in Fig. 7, to facilitate passage of the magnetic flux 74 of the magnets 52 through the Hall elements 60. Thus, the Hall elements 60 do not interfere with the coil ends 28A of the armature coils 28, so that the sensor holder 62 can be disposed close to the coil ends 28A, providing size reduction of the motor 10 and especially of the dimension in the direction of the rotary shaft.

Although, in this embodiment, the electric conductors 74, 76, 78, 80 on the wiring plate 64 are made of thick copper plates formed by blanking, other materials of high conductivity such as aluminium and the ike may be used for the copper plate. Also, conductors such as thick enamel coated conductive wires and the like may be employed instead of the thick plates. The electric conductors 74, 76, 78, 80 may be fixed to the substrate 72 with rivets or screws, etc, or with these fasteners along with adhesive. Any way, the coils 28 are arranged in star connection, and the electric conductor 74 for connecting the neutral points and other electric conductors 76, 78, 80 are separated to be bonded to the different sides of the substrate 72, allowing all the notches 74A, 76A, 78A, 80A to be disposed around the outside circumference of the substrate 72.

Therefore, fitting the coil terminals in the notches 74A, 76A, 78A, 80A will ensure reliable electrical connection and facilitate soldering work. Further, these soldered coil terminals can be located without interference with the sensor holder for holding the Hall elements, radially outwardly of the sensor holder, effecting size reduction of the motor 10. Although the wiring plate 64 is fastened to the plate 32 as a coil guide member in this embodiment, it may be fixed to the inside wall of the case body 12, for positioning in the direction of rotation.

While this invention is applied, in this embodiment, to the stator of a brushless DC motor, this invention may be applied to rotary electric equipment with stator coils with expected desirable result. This invention may be applied, for example, to flywheel magnetos with permanent magnet type rotors, DC motors with brushes, generators, or the like.

According to the invention of claim 1 as described above, on one side of a stator is provided an armature coil connection wiring plate with electric conductors for large electric currents fixed to an annular insulating substrate, and terminals of the armature coils are connected to power source connection lines through these electric conductors. Therefore, terminal treatment of the armature coils can be simple and easy, providing, improved assembly workability of the motor. Thus, an increase in the number of poles of the iron core (slot number) does not increase the difficulty of terminal treatment of the coils, nor bring out bulky terminals treated, effecting size reduction of the motor.

If notches which open facing the peripheral edge of the substrate, are formed in at least some of the electric conductors, coil terminals can be engaged with these notches for connection, providing good workability of wiring (claim 2). The wiring plate can be secured to the coil guide member used for winding the armature coils, in which case the wiring plate can be secured close to the stator, with simple structure, effecting further structural simplicity and size reduction (claim 3).

If the armature coils are arranged in star connection for three-phase alternating current drive, the neutral points of coils are connected to an annular electric conductor bonded on one side of the substrate, and three electric conductors for connecting the non-neutral points of coils are bonded on the other side, so that the electric conductors can be disposed without crossing by making use of both sides of the substrate, providing reasonable disposition (claim 4).

If at least surfaces of the substrate on which the electric conductors are bonded, are coated by insulating layers, correct operation can be possible at all times even when conductive dust or water drops should enter and stick to the surfaces (claim 5). In addition, wire for the coils used here is preferably a stranded wire into which a plurality of enamel wires are stranded together. The stranded wire is flexible and easy to bend, so that coil ends become less bulky, providing improved workability in connecting the coil terminals to the wiring plate (claim 6).

Rotary electrical equipment with armature coils on a stator, wherein the wiring treatment used for connecting the terminals of armature coils of the stator to the power source connection lines, can be simple and easy, assembly workability is improved, the difficulty of terminal treatment does not increase even when the slot number of the iron core is increased, and the treated terminal portions are less bulky and thus suited for size reduction of the whole assembly.

The electrical conductor is preferably a thick plate or wire made of copper, and having a large sectional area sufficient for current passage, for example, preferably a sectional area equal to or greater than that of the armature coil wire. Terminal treatment will become easier if the electrical conductor is formed with notches which open facing the peripheral edge of the insulating substrate, and the terminals of the armature coils are engaged with these notches. Securing the armature coil connection wiring plate to the coil guide member held on the iron core of the stator, is desirable to hold the wiring plate concentrically with the stator, but it may be held inside the case housing the stator.

Rotary electrical equipment with armature coils on a stator, wherein the wiring treatment used for connecting the terminals of armature coils of the stator to the power source connection lines, can be simple and easy, assembly workability is improved, the difficulty of terminal treatment does not increase even when the slot number of the iron core is increased, and the treated terminal portions are less bulky and thus suited for size reduction of the whole assembly.

The electrical conductor is preferably a thick plate or wire made of copper, and having a large sectional area sufficient for current passage, for example, preferably a sectional area equal to or greater than that of the armature coil wire. Terminal treatment will become easier if the electrical conductor is formed with notches which open facing the peripheral edge of the insulating substrate, and the terminals of the armature coils are engaged with these notches. Securing the armature coil connection wiring plate to the coil guide member held on the iron core of the stator, is desirable to hold the wiring plate concentrically with the stator, but it may be held inside the case housing the stator.

## Claims

1. Rotary electrical equipment having armature coils on a stator, characterized in that on one side of said stator is provided an armature coil connection wiring plate with electric conductors for large electric currents fixed to an annular insulating substrate, terminals of said armature coils being connected to power source connection lines through said electric conductors.

2. The rotary electrical equipment of claim 1, wherein said electric conductors are formed with notches which open facing the peripheral edge of said electric insulating substrate, and the terminals of said armature coils are engaged with said notches.

3. The rotary electrical equipment of claim 1 or 2, wherein said armature coils are wound around coil guide members held on an iron core of the stator, and said armature coil connection wiring plate is secured to one of said coil guide members.

4. The rotary electrical equipment of any of claims 1-3, wherein said armature coils are arranged in star connection for three-phase alternating currents, an annular electric conductor for connecting neutral point side terminals of the coils is fixed to one side of said insulating substrate, and three electric conductors each for connecting respective non-neutral point side terminals of the coils, to the other side of said insulating substrate.

5. The rotary electrical equipment of any of claims 1-4, wherein the surfaces of the insulating substrate on which are fixed said electric conductors, are coated by insulating layers.

6. The rotary electrical equipment of any of claims 1-5, wherein stranded wire into which a plurality of enamel wires are stranded together, is used for the armature coils.
